(19) Europäisches Patentamt
European Patent Office
Office européen des brevets

(11) **EP 2 551 199 B1**

(12) **FASCICULE DE BREVET EUROPEEN**

(45) Date de publication et mention de la délivrance du brevet:
**05.09.2018 Bulletin 2018/36**

(51) Int Cl.:
***E05B 51/02*** *(2006.01)*      ***E05C 19/02*** *(2006.01)*
***E05B 15/04*** *(2006.01)*      ***B64D 29/06*** *(2006.01)*

(21) Numéro de dépôt: **12174654.9**

(22) Date de dépôt: **02.07.2012**

(54) **Verrou de surpression**

**Überdruck-Sperrriegel**

**Overpressure lock**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.07.2011 FR 1156786**

(43) Date de publication de la demande:
**30.01.2013 Bulletin 2013/05**

(73) Titulaire: **Lisi Aerospace**
**75583 Paris Cedex 12 (FR)**

(72) Inventeurs:
 • **Defrance, Vincent**
 **18000 Bourges (FR)**

 • **Roussy, Marc**
 **18120 Quincy (FR)**
 • **Luneau, Etienne**
 **36100 Segry (FR)**

(74) Mandataire: **Ipside**
**7-9 Allées Haussmann**
**33300 Bordeaux Cedex (FR)**

(56) Documents cités:
**EP-A1- 1 197 619        WO-A1-2011/069108**
**US-A1- 2002 195 827      US-A1- 2006 049 560**

**Description**

La présente invention se rapporte à un verrou de surpression, en particulier pour aéronefs.

Un verrou de surpression est typiquement utilisé pour fixer un panneau à une structure d'avion. Lorsque la pression augmente dans un compartiment délimité par le panneau, le verrou s'ouvre automatiquement lorsque ladite pression dépasse une valeur déterminée. Des dégradations de l'appareil, liées à la surpression, sont ainsi évitées.

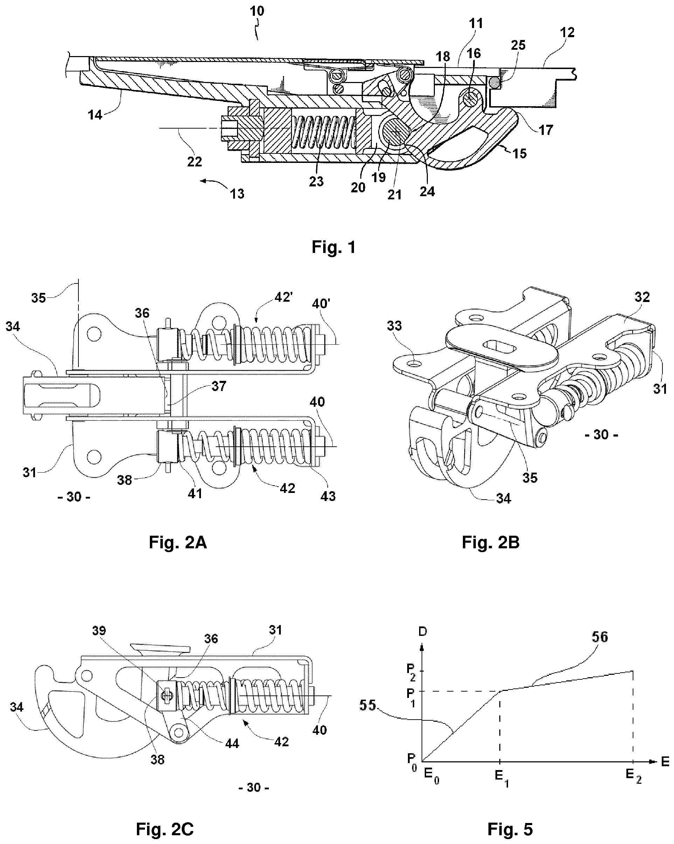

La figure 1 représente un verrou de surpression de l'état de la technique, tel que décrit notamment dans le document EP1197619.

Le verrou 10 permet d'assembler un panneau 11 à une structure 12 d'un avion. Le panneau 11 ferme un compartiment 13, dans lequel la pression est susceptible d'augmenter. Sur la figure 1, le verrou 10 est en position de fermeture du panneau 11.

Le verrou 10 comporte une console 14 fixée au panneau 11. Un levier 15 est mobile en rotation par rapport à la console, selon un axe 16 sensiblement parallèle au panneau 11. Une extrémité 17 arrondie du levier est au contact de la structure 12.

Le levier comporte en outre un profil 18, au contact d'un rouleau cylindrique 19. Le rouleau 19 est monté sur un support 20, en rotation selon un axe 21 parallèle à l'axe 16 de rotation du levier.

Le support 20 est mobile en translation par rapport à la console 14, selon un axe 22 perpendiculaire aux axes (16, 21) et sensiblement parallèle au panneau 11.

Le support 20 est au contact d'une extrémité d'un ressort 23 hélicoïdal de compression, disposé parallèle à l'axe 22. Une autre extrémité du ressort est reliée à la console 14.

Lorsque la pression augmente dans le compartiment 13, la structure 12 exerce une force sur l'extrémité 17 du levier 15, tendant à faire tourner ledit levier autour de son axe 16. Cette force est au départ compensée par l'effort exercé par le ressort 23 sur le profil 18 du levier, par l'intermédiaire du rouleau 19.

Lorsque la pression dans le compartiment 13 atteint un niveau suffisant, une légère rotation du levier 15 autour de l'axe 16 conduit le rouleau 19 à se déplacer vers une crête 24 du profil 18, ce qui comprime le ressort 23. Lorsque la force exercée sur le levier par la structure 12 dépasse celle exercée par le rouleau 19, ledit rouleau franchit la crête 24. Le levier n'est plus retenu en position de fermeture et peut pivoter complètement, déclenchant l'ouverture du panneau 11.

On dénomme « effort d'ouverture » l'effort exercé par la structure 12 sur l'extrémité 17 du levier 15.

Dans le cas d'un verrou 10 tel que représenté à la figure 1, le déplacement en rotation du levier 15, et donc le déplacement du rouleau 19 selon l'axe 22, dépend de l'effort d'ouverture. Cette variation s'effectue selon une courbe qui dépend des caractéristiques mécaniques du ressort 23 et du profil 18 du levier.

Les verrous de surpression sont en particulier utilisés pour fermer des trappes de surpression de mâts-réacteurs, ces derniers reliant les réacteurs à la structure de l'avion. Cette partie de l'avion subit d'importantes sollicitations mécaniques au cours des vols. Il est avantageux que le verrou de surpression soit à même d'absorber de nombreux chocs et vibrations, sans s'ouvrir de manière intempestive.

De plus, les avions de dernière génération sont assujettis à des critères aérodynamiques sévères, afin d'optimiser la consommation en carburant. Un joint 25 d'étanchéité peut être disposé entre la structure 12 et le panneau 11. L'écrasement de ce joint doit être assuré par le verrou 10, sans que l'effort de réaction dudit joint ne déclenche d'ouverture intempestive du verrou.

Par ailleurs, le verrou doit s'adapter aux variations dimensionnelles tolérées pour la fabrication des trappes et du reste de la structure de l'avion. Dans l'art antérieur, des ajustements sont effectués au moyen de rondelles placées entre la console 14 et le panneau 11 lors du montage du verrou, afin d'optimiser la distance entre ladite console et ledit panneau. Ces ajustements génèrent cependant des contraintes de montage et ajoutent du poids à l'avion.

Dans le but de résoudre ces problèmes, l'invention a pour objet un verrou amélioré par rapport à l'état de la technique.

L'invention permet notamment de faire varier le déplacement du levier en fonction de l'effort d'ouverture, de manière à prévoir :

- une première plage d'effort, entre un effort $E_0$ minimal d'ouverture et un effort $E_1$ intermédiaire d'ouverture. Sur cette première plage, la fonction déplacement du levier = f(effort d'ouverture) a une pente élevée ; en d'autres termes, le levier se déplace pour s'adapter aux chocs et variations dimensionnelles, sans déclencher d'ouverture intempestive du verrou ;
- une seconde plage d'effort, entre l'effort $E_1$ et un effort $E_2$ maximal d'ouverture. Sur cette seconde plage, la fonction déplacement du levier = f(effort d'ouverture) a une pente faible. La pression peut alors monter dans le compartiment fermé par le verrou, avant d'atteindre un seuil critique $E_2$ d'effort d'ouverture, au-delà duquel l'ouverture du verrou est déclenchée.

Un objet de l'invention est donc un verrou de surpression, destiné à assembler de manière amovible un panneau d'aéronef à une structure d'aéronef, ledit verrou comprenant : une console apte à être reliée à un panneau ; un levier monté sur la console, mobile en rotation autour d'un premier axe, un effort (E) d'ouverture exercé sur un point d'appui du levier provoquant un déplacement (D) angulaire dudit point d'appui par rapport au premier axe, entre une position de fermeture et une position d'ouverture ; un rouleau disposé selon un deuxième axe sensiblement parallèle au premier axe, apte à rouler contre un profil du levier lorsque ledit levier se déplace entre lesdites positions, ledit rouleau étant relié à une première extrémité d'au moins un dispositif de rappel élastique, une seconde extrémité dudit dispositif étant reliée à la console ; le verrou étant caractérisé en ce qu'il est muni de moyens aptes à faire varier le déplacement (D) angulaire du point d'appui du levier en fonction du l'effort d'ouverture de sorte que :

- entre un effort $E_0$ minimal d'ouverture et un effort $E_1$ intermédiaire d'ouverture, la fonction D = f(E) ait une pente supérieure à une valeur (x)
- entre l'effort $E_1$ intermédiaire et un effort $E_2$ maximal d'ouverture, la fonction D = f(E) ait une pente inférieure à ladite valeur (x).

Ledit effort $E_2$ maximal correspond à un maximum de pression entre le panneau et la structure, l'ouverture du verrou étant déclenchée au-delà de ce maximum de pression. Les moyens aptes à faire varier le déplacement (D) sont portés par le dispositif de rappel élastique et/ou par le profil du levier et/ou par le point d'appui du levier.

Selon un premier mode de réalisation de l'invention, les moyens de variation du déplacement du levier en fonction de l'effort d'ouverture comportent deux ressorts disposés en série, un premier ressort ayant une raideur (k) inférieure à une raideur (k') d'un deuxième ressort.

La raideur totale de l'ensemble est inférieure à la raideur (k) la plus faible. La fonction D = f(E) varie d'abord fortement, jusqu'à un niveau de contrainte maximal atteint par le premier ressort. La fonction D = f(E) a ensuite une pente plus faible, seul le ressort le plus raide réagissant à l'effort d'ouverture.

Une variante possible aux ressorts est un mécanisme de type vérin hydraulique ou pneumatique.

Dans le cadre de l'invention, il est possible d'utiliser différents types de ressorts, par exemple des ressorts de torsion. Cependant, les deux ressorts en série sont préférentiellement deux ressorts hélicoïdaux de compression, disposés en série selon un troisième axe perpendiculaire au premier et au deuxième axes.

Selon une forme préférentielle de l'invention, le verrou comprend une butée coulissante selon le troisième axe, telle que lorsque le levier est soumis à l'effort intermédiaire $E_1$ d'ouverture, le premier ressort hélicoïdal vienne en compression maximale entre ladite butée d'une part et le rouleau ou la console d'autre part.

Selon un deuxième mode de réalisation de l'invention, les moyens de variation de l'effort d'ouverture en fonction du déplacement du levier comportent : une première partie du profil du levier, située entre des points $(p_0, p_1)$ correspondant à une position du rouleau sur ledit profil lorsque l'effort d'ouverture correspond respectivement aux valeurs $(E_0, E_1)$ ; une seconde partie du profil, située entre des points $(p_1, p_2)$ correspondant à une position du rouleau sur ledit profil lorsque l'effort d'ouverture correspond respectivement aux valeurs $(E_1, E_2)$ ; un angle formé par les segments $(p_0, p_1)$ et $(p_1, p_2)$ ayant une concavité orientée vers le rouleau.

Dans la deuxième partie du profil, un effort plus important est nécessaire pour déplacer le levier. La pente de la fonction D = f(E) est donc plus faible pour les valeurs élevées de E que pour les faibles valeurs.

Un tel profil de levier en deux parties peut éventuellement être utilisé en combinaison avec les deux ressorts en série décrits précédemment.

Un autre mode de réalisation de l'invention permet de munir le levier d'une capacité d'adaptation aux faibles efforts exercés par la structure.

Selon ce mode de réalisation, le levier comporte un deuxième dispositif de rappel élastique, mobile en compression selon un troisième axe sensiblement perpendiculaire au premier et au deuxième axes, une extrémité dudit deuxième dispositif étant reliée au point d'appui du levier, une raideur (k) du deuxième dispositif étant inférieure à une raideur (k') du premier dispositif.

Ainsi, les efforts les plus faibles, exercés par la structure sur le levier, peuvent être absorbés par la déformation du deuxième dispositif de rappel élastique. Ces efforts les plus faibles concernent notamment les contraintes dimensionnelles lors de l'installation du verrou, ainsi que les vibrations et les chocs subis lors du fonctionnement de l'aéronef. De cette manière, on évite les ouvertures intempestives du verrou, non liées à une surpression dans le compartiment fermé par le panneau portant ledit verrou.

Selon une forme préférentielle de l'invention, le deuxième dispositif de rappel élastique comporte un ressort hélicoïdal de compression, de raideur k. De même, préférentiellement, le premier dispositif de rappel élastique comporte un ressort hélicoïdal de compression, de raideur k', disposé selon un quatrième axe perpendiculaire au premier et au deuxième axes.

Selon une forme préférentielle de l'un des objets de l'invention décrits ci-dessus, le verrou comprend deux dispositifs de rappel élastique, lesdits dispositifs étant identiques, disposés selon deux axes parallèles, chacun des dispositifs étant relié à une extrémité du rouleau.

Selon une forme préférentielle des objets de l'invention décrits ci-dessus, le rouleau est relié à la console par une biellette. Une alternative est possible, dans laquelle le rouleau est apte à coulisser le long d'une glissière solidaire de la console.

L'invention a également pour objet un aéronef muni d'un verrou de surpression tel que l'un des objets de l'invention décrits ci-dessus, ledit verrou assemblant de manière amovible un panneau à une structure, la console étant reliée au panneau et le point d'appui du levier étant apte à entrer en contact avec la structure.

Les différents aspects de l'invention seront mieux compris à la lecture de la description qui suit et à l'examen des figures qui l'accompagnent. Celles-ci sont données à titre indicatif. Les figures montrent :

- Figure 1, déjà décrite : vue en coupe d'un verrou de l'état de la technique.
- Figures 2A, 2B, 2C : vues d'un verrou selon un premier mode de réalisation de l'invention ;
- Figure 3 : vue du verrou des figures 2A-2C assemblé à une structure d'aéronef ;
- Figures 4A, 4B : vues partielle du verrou des figures 2A-2C ;
- Figure 5 : représentation graphique du déplacement du point d'appui du levier en fonction de la variation de l'effort d'ouverture ;
- Figures 6A, 6B, 6C : vues d'un verrou selon un deuxième mode de réalisation de l'invention ;
- Figures 7A, 7B : vues d'un verrou selon un troisième mode de réalisation de l'invention ;

La figure 2A représente un verrou 30 selon un mode de réalisation de l'invention, en vue de dessous. Par « vue de dessous », on considère que le dessus du verrou est orienté vers un panneau auquel est susceptible d'être fixé ledit verrou, le dessous étant orienté vers le compartiment fermé par un tel panneau. La figure 2B représente le verrou 30 en perspective. La figure 2C représente le verrou 30 en vue de côté.

Le verrou 30 comporte une console 31. Ladite console comporte une surface 32 supérieure sensiblement plane, destinée à entrer en contact avec un panneau d'aéronef. La surface 32 est munie de trous 33 de fixation audit panneau. Un levier 34 est mobile en rotation par rapport à la console, autour d'un axe 35 sensiblement parallèle à la surface 32.

Le levier comporte un profil 36, au contact d'un rouleau cylindrique 37. Le rouleau 37 est monté sur un support 38, en rotation autour d'un axe 39 parallèle à l'axe 35 de rotation du levier.

Le support 38 est mobile par rapport à la console 31, au moyen d'une biellette 44. Le support 38 est notamment mobile en translation, selon un axe 40 perpendiculaire aux axes (35, 39) et sensiblement parallèle à la surface 32. Le support 38 coulisse à l'intérieur d'une entretoise épaulée formant butée 49.

Le support 38 est au contact d'une extrémité 41 d'un dispositif 42 de rappel élastique, disposé selon l'axe 40. Une autre extrémité 43 du dispositif 42 est reliée à la console 31, contre laquelle il s'appuie.

Sur les figures 2A, 2B, 2C, le verrou 30 est représenté avec le levier 34 en position $P_r$ de repos. On considère $P_r$, ainsi que les autres positions évoquées plus bas, comme les positions angulaires du levier 34 par rapport à la console 31 et à l'axe 35.

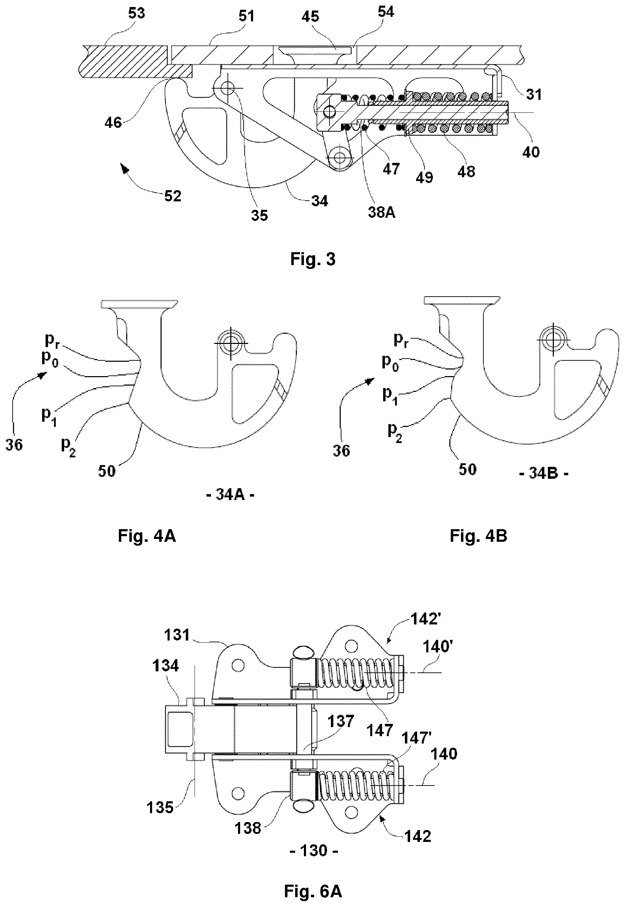

Cette position $P_r$ de repos, ou de fermeture, correspond à une compression minimale du dispositif 42. Dans cette position $P_r$, le rouleau 37 est en contact avec un point $p_r$ du profil 36 (voir figure 3), ledit point correspondant avec la plus faible distance dudit profil avec l'axe 35.

La figure 3 montre une vue de profil, en coupe, du verrou des figures 2A-2C monté sur un panneau d'aéronef.

Le verrou 30 est notamment monté sur un panneau 51, qui ferme un compartiment 52. Le verrou 30 associe le panneau 51 à une structure 53.

Le panneau 51 comporte un orifice 54, à travers lequel peut se déplacer une partie 45 du levier 34, lorsque ledit levier pivote autour de l'axe 35.

Le levier 34 comporte par ailleurs un point 46 d'appui, qui vient au contact de la structure 53 lorsque le panneau 51 est fermé.

On considère que sur la figure 3, le levier est dans une position $P_0$ par rapport à la console 31 et à l'axe 35. Cette position correspond à un effort $E_0$ minimal exercé par la structure 53 sur le point 46 d'appui. De préférence, en position $P_0$ du levier, le dispositif 42 est légèrement comprimé, c'est-à-dire que le rouleau 37 est plus éloigné de l'axe 35 que dans la position $P_r$ de repos.

Lorsque la pression augmente dans le compartiment 52, l'effort exercé par la structure 53 sur le point 46 augmente, ce qui engendre une rotation du levier autour de l'axe 35. Le rouleau 37 se déplace alors le long du profil 36. Ledit profil est configuré de telle sorte que la distance entre le rouleau 37 et l'axe 35 commence par augmenter, depuis la position $P_0$.

Deux exemples 34A et 34B de leviers 34 sont respectivement représentés aux figures 4A et 4B. Ces figures montrent les profils 36 desdits leviers, plus particulièrement les points ($p_r$, $p_0$) au contact du rouleau 37 respectivement en position $P_r$ de repos et en position $P_0$ d'effort minimal.

Dans l'exemple représenté aux figures 2A, 2B, 2C et 3, le dispositif 42 de rappel élastique comporte deux ressorts (47, 48) hélicoïdaux de compression, montés en série sur le support 38 et la butée 49, selon l'axe 40. Un premier ressort 47 est relié par une extrémité 41 au support 38. Un deuxième ressort 48 est relié par une extrémité 43 à la console 31. La butée 49, coulissante sur le support 38 selon l'axe 40 est reliée à l'autre extrémité des ressorts (47, 48) hélicoïdaux.

Le premier ressort 47 a une raideur k inférieure à une raideur k' du deuxième ressort 48. Lorsque le levier 34 pivote depuis la position $P_0$, les ressorts (47, 48) sont comprimés en raison du déplacement du rouleau 37 le long du profil 36 et selon l'axe 40.

Le deuxième ressort 48 peut en variante présenter une raideur k inférieure à une raideur k' du premier ressort 47 : quelle que soit la disposition des ressorts, celui dont la raideur est la plus faible se comprimera en premier.

Il est connu que la raideur k" totale des ressorts (47, 48) en série peut s'exprimer selon la formule suivante :

$$1/k'' = 1/k + 1/k'$$

La raideur k" totale est donc inférieure à la raideur k la plus faible des ressorts (47, 48). Lorsque le rouleau 37 est à proximité du point $p_0$, le déplacement D angulaire du levier 34, par rapport à la console 31 et à l'axe 35, varie de manière importante en fonction de l'effort E d'ouverture exercé sur le point 46 d'appui.

Le premier ressort 47 ayant la plus faible raideur, il subit la compression la plus importante entre le support 38 et la butée 49. Lorsque le rouleau atteint un point $p_1$ du profil 36, correspondant à une position $P_1$ du levier 34, le ressort 47 atteint un niveau maximal de compression. Un épaulement 38A du support 38 vient ainsi en appui contre la butée 49. En alternative, le support 38 ne comporte pas d'épaulement et le ressort 47, en compression maximale, est en spires jointives et vient en appui contre la butée 49. Cette position $P_1$ du levier correspond à un effort $E_1$ intermédiaire d'ouverture exercé sur le point 46 d'appui.

A partir de la position $P_1$ du levier, c'est la raideur k' du second ressort 48 qui représente la raideur k" totale du dispositif 42. A partir de ladite position $P_1$, le déplacement D angulaire du levier 34 varie plus faiblement en fonction de l'effort E d'ouverture exercé sur le point 46 d'appui.

La rotation du levier 34 entre les positions $P_0$ et $P_1$ permet au verrou 30 de s'adapter aux variations dimensionnelles lors du montage sur le panneau 51, ainsi que d'absorber des vibrations et des chocs en cours d'utilisation.

La rotation du levier au-delà de la position $P_1$ correspond quant à elle à une réaction du verrou 30 à l'augmentation de la pression dans le compartiment 52.

Le profil 36 (fig. 4A, 4B) comporte une crête $p_2$, correspondant à une position $P_2$ du levier 34. Ladite position correspond à un effort $E_2$ maximal d'ouverture, lié à un seuil maximal de pression dans le compartiment 52. Au-delà de ce seuil, le rouleau 37 atteint une partie 50 du profil 36, sur laquelle la distance avec l'axe 35 diminue. Le dispositif de rappel 42 se détend, ce qui provoque le basculement complet du levier 34 dans une position d'ouverture. Le point 46 d'appui perd ainsi le contact avec la structure 53. La surpression dans le compartiment 52 déclenche alors l'ouverture du panneau 51.

La figure 5 représente une courbe schématique D = f(E) du verrou 30 de la figure 3, le levier 34 étant l'exemple 34B de la figure 4B. L'origine de la courbe correspond à l'effort $E_0$ minimal, le levier étant en position $P_0$.

La courbe D = f(E) a une première partie 55, sensiblement linéaire lorsque l'effort varie entre $E_0$ et $E_1$. Entre $E_1$ et $E_2$, la courbe présente une deuxième partie 56 également linéaire, de pente plus faible.

On considère une valeur x, inférieure à la pente de la première partie 55 et supérieure à la pente de la deuxième partie 56. La valeur x dépend notamment des raideurs (k, k') des ressorts (47, 48) et de la forme du profil 36.

Dans l'exemple de la figure 4B, le profil 36 a une forme sinusoïdale, de manière à ce que la courbe E = f(D) présente deux parties (55, 56) sensiblement linéaires. Cependant, il est possible de définir le profil 36 selon une forme différente, les parties (55, 56) de la courbe pouvant être non linéaires. Par exemple, sur la figure 4A, le profil 36 a une forme sensiblement plate.

De manière préférentielle, le verrou 30 comporte un double dispositif (42, 42') de rappel élastique. Les deux dispositifs (42, 42') sont identiques, disposés selon deux axes (40, 40') parallèles, chacun des dispositifs étant relié à une extrémité du rouleau 37.

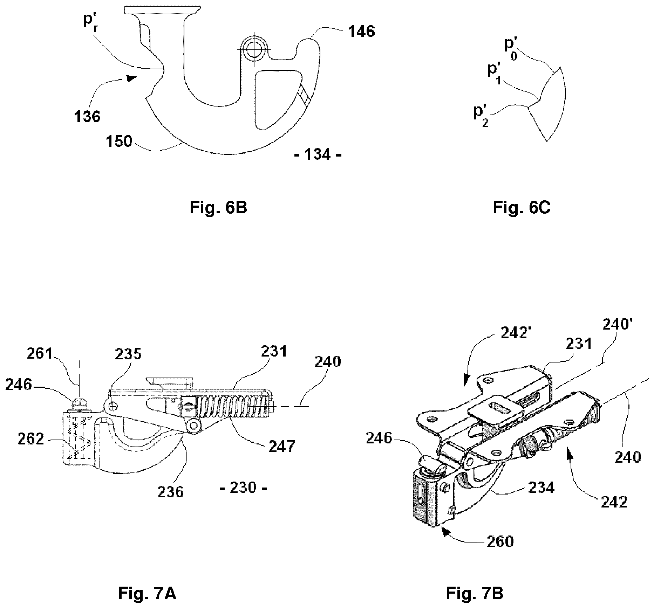

La figure 6A représente un verrou 130 selon un autre mode de réalisation de l'invention. Le verrou 130 est analogue au verrou 30 précédemment décrit, en ce qu'il comporte une console 131 sur laquelle est monté un levier 134, mobile en rotation selon un axe 135. Le levier 134 possède un point 146 d'appui (fig. 6B) pour entrer en contact avec une structure. Le levier 134 comporte un profil 136 sur lequel peut rouler un rouleau 137. Le rouleau est monté en rotation sur un support 138, relié à une extrémité de deux dispositifs (142, 142') de rappel élastique, lesdits dispositifs étant identiques et compressibles selon deux axes (140, 140') parallèles, perpendiculaires à l'axe 135.

Contrairement au verrou 30, les dispositifs (142, 142') de rappel élastique du verrou 130 comportent un seul ressort hélicoïdal (147, 147') de raideur k'.

La figure 6B représente une vue du levier 134, la figure 6C étant une vue de détail du profil 136. On distingue le point $p'_r$ de repos, au contact duquel se trouve le rouleau 137 en position de fermeture du verrou 130. Ledit verrou est configuré de sorte que, lorsqu'il est monté sur un panneau d'aéronef comme sur la figure 3, le rouleau 137 soit au contact d'un point $p'_0$ légèrement plus éloigné de l'axe 135 que le point $p'_r$ de repos. Lorsque le levier 134 tourne autour de son axe, le rouleau 137 se déplace vers un point $p'_1$, puis vers une crête $p'_2$. Au-delà de la crête $p'_2$, le rouleau 137 se retrouve au contact d'une partie 150 du profil 136 dont la distance avec l'axe 135 diminue, ce qui provoque l'ouverture complète du verrou.

Comme il est visible sur les figures 6B et 6C, les points ($p'_0$, $p'_1$, $p'_2$) forment un angle dont une concavité est orientée vers le rouleau 137. Ainsi le rouleau 137 peut s'appuyer au creux dudit angle. Le profil 136 est conçu de sorte que, entre $p'_0$ et $p'_1$, la distance entre le rouleau et l'axe 135 augmente lentement par rapport au déplacement du rouleau selon l'axe 140. Entre $p'_1$, et $p'_2$, la distance entre le rouleau et l'axe 135 augmente plus vite par rapport audit déplacement du rouleau.

Ainsi, comme dans l'exemple précédent, on obtient une courbe D = f(E) qui présente une première partie à pente élevée et une deuxième partie à pente plus faible. La première partie permet au verrou de s'adapter aux variations dimensionnelles et d'absorber les chocs et les vibrations sans s'ouvrir intempestivement.

Il est également possible de combiner, sur un même verrou, les deux ressorts (47, 48) en série et un profil de levier analogue au profil 136.

Les figures 7A et 7B représentent des vues d'un verrou 230 selon un autre aspect de l'invention.

De même que les verrous 30 et 130, le verrou 230 est destiné à assembler de manière amovible un panneau à une structure d'aéronef.

Le verrou 230 comprend une console 231 apte à être reliée à un panneau d'aéronef. La console 231 a une forme similaire à celle des consoles 31 et 131. Un levier 234 est monté en rotation sur la console selon un axe 235. Le levier comporte un profil 236 sur lequel peut rouler un rouleau 237. Le rouleau est monté en rotation sur un support 238, relié à une extrémité de deux dispositifs (242, 242') de rappel élastique, lesdits dispositifs étant identiques et comprimables selon deux axes (240, 240') parallèles, perpendiculaires à l'axe 235. Les dispositifs (242, 242') sont analogues aux dispositifs (142, 142') du verrou 130. Plus précisément, le dispositif 242 comporte un seul ressort 247 hélicoïdal de raideur k'.

Le profil 236 du levier 234 est par exemple le profil 36 représenté à la figure 4A. Il peut également s'agir d'un profil 136 tel que représenté à la figure 6B.

Par ailleurs, le levier 234 comporte un élément 246 d'appui, destiné à entrer en contact avec une structure d'aéronef, telle que la structure 53 de la figure 3. L'élément 246 est relié à un troisième dispositif 260 de rappel élastique, comprimable selon un axe 261 perpendiculaire à l'axe 135. Le dispositif 260 comprend par exemple un ressort 262 hélicoïdal de compression. Ledit ressort 262 a une raideur k inférieure à la raideur k' du ressort 247.

Ainsi, lorsque le verrou 230 est monté sur un aéronef comme représenté sur la figure 3, l'élément 246 d'appui entre en contact avec la structure dudit aéronef. Lors du montage, les variations dimensionnelles du verrou et/ou de la structure sont compensées par une plus ou moins grande compression du ressort 262 selon l'axe 261. De même, cette compression permet d'absorber des vibrations et des chocs, sans déclencher l'ouverture du verrou 230.

Dans ce cas, on observe un déplacement D de l'élément 246 par rapport à la console 231 et à l'axe 235, sans que le levier 234 ne se déplace en rotation autour dudit axe 235. Bien que le mouvement de l'élément 246 soit axial pour de faibles efforts E, on peut considérer que D est son déplacement angulaire par rapport à la console 231 et à l'axe 235.

Lorsque la pression augmente dans un compartiment fermé par le verrou 230, l'effort exercé par la structure sur le verrou 230 augmente. Au-delà d'un certain niveau de pression, le ressort 262 atteint un seuil de compression maximal. Une augmentation de la pression génère alors une rotation du levier 234 autour de l'axe 235. Le déplacement D de l'élément 246 correspond dans ce cas à une rotation effective du levier.

Le résultat technique atteint par le verrou 230 est donc identique à celui des verrous (30, 130). En effet, le verrou 230 possède un élément apte à se déformer selon une première plage d'effort, afin d'absorber des variations dimensionnelles ou des chocs sans déclencher l'ouverture du verrou. Une deuxième plage d'effort exercé sur le levier aboutit ensuite à l'ouverture du verrou de surpression, selon un fonctionnement connu.

**Revendications**

1. Verrou (30, 130, 230) de surpression, destiné à assembler de manière amovible un panneau (51) d'aéronef à une structure (53) d'aéronef, ledit verrou comprenant :

   - une console (31, 131, 231) apte à être reliée au panneau (51) ;
   - un levier (34, 134, 234) monté sur la console, mobile en rotation autour d'un premier axe (35, 135, 235),

   un effort (E) d'ouverture exercé sur un point (46, 146, 246) d'appui du levier provoquant un déplacement (D) angulaire dudit point d'appui par rapport au premier axe, entre une position de fermeture et une position d'ouverture,

   - un rouleau (37, 137, 237) disposé selon un deuxième axe (39) sensiblement parallèle au premier axe, apte à rouler contre un profil (36, 136, 236) du levier lorsque ledit levier se déplace entre lesdites positions,
   - ledit rouleau étant relié à une première extrémité (41) d'au moins un dispositif (42, 142, 242) de rappel élastique, une seconde extrémité (43) dudit dispositif étant reliée à la console,

   le verrou étant **caractérisé en ce qu'**il est muni de moyens (47, 48, 136, 260) aptes à faire varier le déplacement (D) angulaire du point d'appui du levier en fonction du l'effort d'ouverture de sorte que :

   - entre un effort $E_0$ minimal d'ouverture et un effort $E_1$ intermédiaire d'ouverture, la fonction D = f(E) ait une pente supérieure à une valeur (x)
   - entre l'effort $E_1$ intermédiaire et un effort $E_2$ maximal d'ouverture, la fonction D = f(E) ait une pente inférieure à ladite valeur (x),

   ledit effort $E_2$ maximal correspondant à un maximum de pression entre le panneau et la structure, au-delà duquel la position d'ouverture est atteinte, lesdits moyens (47, 48, 136, 260) étant portés par le dispositif de rappel élastique et/ou par le profil du levier et/ou par le point d'appui du levier.

2. Verrou selon la revendication 1, tel que des moyens de variation du déplacement (D) en fonction de l'effort d'ouverture (E) **sont portés par le dispositif de rappel élastique et** comportent deux ressorts (47, 48) disposés en série, un premier ressort (47) ayant une raideur (k) inférieure à une raideur (k') d'un deuxième ressort (48).

3. Verrou selon la revendication 2 tel que le dispositif de rappel élastique comporte deux ressorts hélicoïdaux de compression, disposés en série selon un troisième axe (40) perpendiculaire au premier et au deuxième axes (35, 39).

4. Verrou selon la revendication 3, comprenant une butée (49) coulissante selon le troisième axe, telle que lorsque le levier est soumis à l'effort intermédiaire $E_1$ d'ouverture, le premier ressort (47) hélicoïdal vienne en compression maximale entre ladite butée d'une part et le rouleau ou la console d'autre part.

5. Verrou (130) selon l'une des revendications précédentes, tel que les moyens de variation de l'effort d'ouverture en fonction du déplacement du levier comportent :

- une première partie du profil (136) du levier, située entre des points ($p_0$, $p_1$) correspondant à une position du rouleau sur ledit profil lorsque l'effort d'ouverture correspond respectivement aux valeurs ($E_0$, $E_1$) ;
- une seconde partie du profil, située entre des points ($p_1$, $p_2$) correspondant à une position du rouleau sur ledit profil lorsque l'effort d'ouverture correspond respectivement aux valeurs ($E_1$, $E_2$) ;

un angle formé par les segments ($p_0$, $p_1$) et ($p_1$, $p_2$) au creux duquel le rouleau (137) peut s'appuyer.

6. Verrou (230) selon la revendication 1, tel que le levier comporte un deuxième dispositif (260) de rappel élastique, mobile en compression selon un troisième axe (261) sensiblement perpendiculaire au premier et au deuxième axes, une extrémité dudit deuxième dispositif étant reliée au point (246) d'appui du levier, une raideur (k) du deuxième dispositif étant inférieure à une raideur (k') du premier dispositif.

7. Verrou selon la revendication 6, tel que le deuxième dispositif de rappel élastique comporte un ressort (262) hélicoïdal de compression, de raideur (k).

8. Verrou selon la revendication 6 ou la revendication 7, tel que le premier dispositif de rappel élastique comporte un ressort (247) hélicoïdal de compression, de raideur (k'), disposé selon un quatrième axe (240) perpendiculaire au premier et au deuxième axes.

9. Verrou selon l'une des revendications précédentes, comprenant deux dispositifs (42, 42' ; 242, 242') de rappel élastique, lesdits dispositifs étant identiques, disposés selon deux axes (40, 40' ; 240, 240') parallèles, chacun des dispositifs étant relié à une extrémité du rouleau.

10. Verrou selon l'une des revendications précédentes, tel que le rouleau est relié à la console par une biellette (44).

11. Verrou selon l'une des revendications 1 à 9, tel que le rouleau est apte à coulisser le long d'une glissière solidaire de la console.

12. Aéronef muni d'un verrou de surpression selon l'une des revendications précédentes, ledit verrou assemblant de manière amovible un panneau (51) à une structure (53), la console étant reliée au panneau et le point d'appui (46, 146, 246) du levier étant apte à entrer en contact avec la structure.

**Patentansprüche**

1. Überdruckverriegelung (30, 130, 230), die dazu vorgesehen ist, eine Platte (51) eines Flugzeugs in abnehmbarer Weise mit einer Struktur (53) eines Flugzeugs zusammenzufügen, wobei die Verriegelung umfasst:

- eine Konsole (31, 131, 231), die in der Lage ist, mit der Platte (51) verbunden zu werden;
- einen an der Konsole montierten Hebel (34, 134, 234), der um eine erste Achse (35, 135, 235) herum drehbeweglich ist,

wobei eine Öffnungskraft (E), die auf einen Auflagepunkt (46, 146, 246) des Hebels ausgeübt wird, eine Winkelverschiebung (D) des Auflagepunkts in Bezug auf die erste Achse zwischen einer Verschlussstellung und einer Öffnungsstellung bewirkt,

- eine Rolle (37, 137, 237) die gemäß einer im Wesentlichen zur ersten Achse parallelen zweiten Achse (39) angeordnet ist, welche in der Lage ist, gegen ein Profil (36, 136, 236) des Hebels zu rollen, wenn sich der Hebel zwischen den Stellungen verschiebt,
- wobei die Rolle mit einem ersten Ende (41) von mindestens einer elastischen Rückstellvorrichtung (42, 142, 242) verbunden ist, wobei ein zweites Ende (43) der Vorrichtung mit der Konsole verbunden ist,

wobei die Verriegelung **dadurch gekennzeichnet ist, dass** sie mit Mitteln (47, 48, 136, 260) ausgestattet ist, die in der Lage sind, die Winkelverschiebung (D) des Auflagepunkts des Hebels als Funktion der Öffnungskraft variieren zu lassen, sodass:

- zwischen einer minimalen Öffnungskraft $E_0$ und einer Zwischen-Öffnungskraft $E_1$ die Funktion D = f(E) eine Steigung aufweist, die größer ist als ein Wert (x),
- zwischen der Zwischenkraft $E_1$ und einer maximalen Öffnungskraft $E_2$ die Funktion D = f(E) eine Steigung aufweist, die kleiner ist als der Wert (x),

wobei die maximale Kraft $E_2$ einem Druckmaximum zwischen der Platte und der Struktur entspricht, über das hinaus die Öffnungsstellung erreicht wird, wobei die Mittel (47, 48, 136, 260) von der elastischen Rückstellvorrichtung und/oder vom Profil des Hebels und/oder vom Auflagepunkt des Hebels getragen werden.

2. Verriegelung nach Anspruch 1, derart, dass Mittel zum Variieren der Verschiebung (D) als Funktion der Öffnungskraft (E) von der elastischen Rückstellvorrichtung getragen werden und zwei in Reihe angeordnete Federn (47, 48) umfasst, wobei eine erste Feder (47) eine Steifigkeit (k) aufweist, die kleiner ist als eine Steifigkeit (k') einer zweiten Feder (48).

3. Verriegelung nach Anspruch 2, derart, dass die elastische Rückstellvorrichtung zwei Schraubendruckfedern umfasst, die gemäß einer dritten Achse (40) senkrecht zur ersten und zur zweiten Achse (35, 39) in Reihe angeordnet sind.

4. Verriegelung nach Anspruch 3, die einen Anschlag (49) umfasst, der gemäß der dritten Achse gleitet, derart, dass wenn der Hebel einer Zwischen-Öffnungskraft $E_1$ ausgesetzt wird, die erste Schraubenfeder (47) zwischen einerseits dem Anschlag und andererseits der Rolle oder der Konsole unter maximalen Druck gelangt.

5. Verriegelung (130) nach einem der vorstehenden Ansprüche, derart, dass die Mittel zum Variieren der Öffnungskraft als Funktion der Verschiebung des Hebels umfassen:

- einen ersten Teil des Profils (136) des Hebels, der zwischen Punkten ($p_0$, $p_1$) liegt, welche einer Stellung der Rolle am Profil entsprechen, wenn die Öffnungskraft jeweils den Werten ($E_0$, $E_1$) entspricht;
- einen zweiten Teil des Profils, der zwischen Punkten ($p_1$, $p_2$) liegt, welche einer Stellung der Rolle am Profil entsprechen, wenn die Öffnungskraft jeweils den Werten ($E_1$, $E_2$) entspricht;

einen Winkel, der von den Segmenten ($p_0$, $p_1$) und ($p_1$, $p_2$) gebildet wird, in dessen Höhlung die Rolle (137) aufliegen kann.

6. Verriegelung (230) nach Anspruch 1, derart, dass der Hebel eine zweite elastische Rückstellvorrichtung (260) umfasst, die gemäß einer im Wesentlichen zur ersten und zur zweiten Achse senkrechten dritten Achse (261) druckbeweglich ist, wobei ein Ende der zweiten Vorrichtung mit dem Auflagepunkt (246) des Hebels verbunden ist, wobei eine Steifigkeit (k) der zweiten Vorrichtung kleiner ist als eine Steifigkeit (k') der ersten Vorrichtung.

7. Verriegelung nach Anspruch 6, derart, dass die zweite elastische Rückstellvorrichtung eine Schraubendruckfeder (262) von Steifigkeit (k) umfasst.

8. Verriegelung nach Anspruch 6 oder Anspruch 7, derart, dass die erste elastische Rückstellvorrichtung eine Schraubendruckfeder (247) von Steifigkeit (k') umfasst, die gemäß einer zur ersten und zur zweiten Achse senkrechten vierten Achse (240) angeordnet ist.

9. Verriegelung nach einem der vorstehenden Ansprüche, die zwei elastische Rückstellvorrichtungen (42, 42'; 242, 242') umfasst, wobei die Vorrichtungen identisch sind, gemäß zwei parallelen Achsen (40, 40'; 240, 240') angeordnet sind, wobei jede der Vorrichtungen mit einem Ende der Rolle verbunden ist.

10. Verriegelung nach einem der vorstehenden Ansprüche, derart, dass die Rolle über einen Schwingarm (44) mit der Konsole verbunden ist.

11. Verriegelung nach einem der Ansprüche 1 bis 9, derart, dass die Rolle in der Lage ist, entlang einer Gleitschiene zu gleiten, die fest mit der Konsole verbunden ist.

12. Flugzeug, das mit einer Überdruckverriegelung nach einem der vorstehenden Ansprüche ausgestattet ist, wobei die Verriegelung eine Platte (51) in abnehmbarer Weise mit einer Struktur (53) zusammenfügt, wobei die Konsole mit der Platte verbunden ist, und der Auflagepunkt (46, 146, 246) des Hebels in der Lage ist, mit der Struktur in Berührung zu gehen.

**Claims**

1. Overpressure safety latch (30, 130, 230), intended to removably assemble an aircraft panel (51) to an aircraft structure (53), said latch comprising:

- a console (31, 131, 231) able to be connected to the panel (51);
- a lever (34, 134, 234) mounted on the console, mobile in rotation about a first axis (35, 135, 235),

an opening force (E) exerted on a bearing point (46, 146, 246) of the lever causing an angular displacement (D) of said bearing point with respect to the first axis, between a closing position and an opening position,

- a roller (37, 137, 237) arranged along a second axis (39) substantially parallel to the first axis, able to roll against a profile (36, 136, 236) of the lever when said lever is displaced between said positions,
- said roller being connected to a first end (41) of at least one elastic return device (42, 142, 242), with a second end (43) of said device being connected to the console,

the latch being **characterised in that** it is provided with means (47, 48, 136, 260) able to vary the angular displacement (D) of the bearing point of the lever according to the opening force in such a way that:

- between a minimum opening force $E_0$ and an intermediate opening force $E_1$, the function D = f(E) has a slope greater than a value (x),
- between the intermediate force $E_1$ and a maximum opening force $E_2$, the function D = f(E) has a slope less than said value (x),

said maximum force $E_2$ corresponding to a maximum of pressure between the panel and the structure, beyond which the opening position is reached, said means (47, 48, 136, 260) being carried by the elastic return device and/or by the profile of the lever and/or by the bearing point of the lever.

2. Latch according to claim 1, such that means for varying the displacement (D) according to the opening force (E) are carried by the elastic return device and comprise two springs (47, 48) arranged in series, a first spring (47) having a stiffness (k) less than a stiffness (k') of a second spring (48).

3. Latch according to claim 2 such that the elastic return device comprises two helical compression springs, arranged in series along a third axis (40) perpendicular to the first and to the second axes (35, 39).

4. Latch according to claim 3, comprising a stop (49) sliding along the third axis, such that when the lever is subjected to the intermediate opening force $E_1$, the first helical spring (47) assumes maximum compression between said stop on the one hand and the roller or the console on the other hand.

5. Latch (130) according to one of the preceding claims, such that the means for carrying the opening force according to the displacement of the lever comprise:

- a first portion of the profile (136) of the lever, located between points ($p_0$, $p_1$) corresponding to a position of the roller on said profile when the opening force corresponds respectively to the values ($E_0$, $E_1$);
- a second portion of the profile, located between points ($p_1$, $p_2$) corresponding to a position of the roller on said profile when the opening force corresponds respectively to the values ($E_1$, $E_2$) ;

an angle formed by the segments ($p_0$, $p_1$) and ($p_1$, $p_2$) at the hollow of which the roller (137) can bear against.

6. Latch (230) according to claim 1, such that the lever comprises a second elastic return device (260), mobile in compression along a third axis (261) substantially perpendicular to the first and second axes, with an end of said second device being connected to the bearing point (246) of the lever, a stiffness (k) of the second device being less than a stiffness (k') of the first device.

7. Latch according to claim 6, such that the second elastic return device comprises a helical compression spring (262), with stiffness (k).

8. Latch according to claim 6 or claim 7, such that the first elastic return device comprises a helical compression spring (247), with stiffness (k'), arranged along a fourth axis (240) perpendicular to the first and to the second axes.

9. Latch according to one of the preceding claims, comprising two elastic return devices (42, 42'; 242, 242'), said devices being identical, arranged along two parallel axes (40, 40'; 240, 240'), with each one of the devices being connected to an end of the roller.

10. Latch according to one of the preceding claims, such that the roller is connected to the console by a tie-rod (44).

11. Latch according to one of claims 1 to 9, such that the roller is able to slide along a slider integral with the console.

12. Aircraft provided with an overpressure safety latch according to one of the preceding claims, said latch removably assembling a panel (51) to a structure (53), the console being connected to the panel and the bearing point (46, 146, 246) of the lever being able to come into contact with the structure.

**Fig. 1**

**Fig. 2A**

**Fig. 2B**

**Fig. 2C**

**Fig. 5**

**Fig. 3**

- 34A -

**Fig. 4A**

- 34B -

**Fig. 4B**

- 130 -

**Fig. 6A**

$p'_r$

146

136

150

- 134 -

**Fig. 6B**

$p'_0$
$p'_1$
$p'_2$

**Fig. 6C**

261
246
262

235

231

240

247

236    - 230 -

**Fig. 7A**

242'    240'
231
246

234    240

242

260

**Fig. 7B**

**EP 2 551 199 B1**

**RÉFÉRENCES CITÉES DANS LA DESCRIPTION**

**Documents brevets cités dans la description**

- EP 1197619 A